# FASCICULE DE BREVET EUROPEEN

(11) **EP 2 080 404 B1**
(45) Date de publication et mention de la délivrance du brevet: **12.12.2018**
(21) Numéro de dépôt: 07858596.5
(22) Date de dépôt: 16.10.2007
(51) Int. Cl.: H04W 4/00

(54) **SERVEUR DESCRIPTEUR DE RÉGION ET PROCÉDÉ DE SÉLECTION D'UN RÉSEAU SANS FIL**
REGIONSDESKRIPTOREN-SERVER UND VERFAHREN ZUR AUSWAHL EINES DRAHTLOSEN NETZWERKS
REGION DESCRIPTOR SERVER AND METHOD OF SELECTING A WIRELESS NETWORK

(30) Priorité: 19.10.2006 FR 0654385
(43) Date de publication de la demande: 22.07.2009
(73) Titulaire: Orange, 75015 Paris (FR)
(72) Inventeur: MIGAULT, Daniel, 92130 Issy Les Moulineaux (FR); BUTTI, Laurent, 92130 Issy Les Moulineaux (FR); MATHIEU, Bertrand, 22560 Pleumeur Bodou (FR)
(86) Numéro de dépôt international: PCT/FR2007/052170
(87) Numéro de publication internationale: WO 2008/047042

(56) Documents cités:
- EP-A- 1 253 796
- US-A1- 2005 018 686
- US-A1- 2005 054 369

## Description

La présente invention concerne la fourniture à des équipements clients localisés dans une région géographique, d'informations de confiance relatives à des réseaux sans fil et des ressources de la région géographique. Ces informations de confiance permettent à des équipements clients de sélectionner un réseau sans fil parmi ceux de la région géographique pour leur accès réseau. Ainsi, l'invention concerne la sécurité dans les technologies d'accès à des réseaux sans fil, par exemple les réseaux de type IEEE 802.11 normalisé par l'institute of Electrical and Electronics Engineers (IEEE), les réseaux WiMax (de l'anglais "Worldwide Interoperability for Microwave Access"), ou les réseaux UMTS (de l'anglais "Universal Mobile Telecommunications System").

L'invention trouve une application particulièrement intéressante dans les réseaux publics d'accès par des technologies sans fil, ou réseaux de type "hotspot" (terme anglais couramment utilisé pour désigner un lieu public à forte affluence, clairement délimité, et donnant accès à un réseau sans fil).

Dans un réseau 802.11, un équipement client, équipé d'une carte réseau WiFi à la norme IEEE 802.11 permettant à l'équipement d'accéder à un réseau sans fil, et qui souhaite accéder à un réseau d'accès sans fil doit, dans un premier temps, s'attacher à un point d'accès de ce réseau sans fil.

Les technologies de type IEEE 802.11 prévoient que l'attachement d'un équipement client à un point d'accès s'effectue en trois étapes au cours desquelles des trames de gestion sont échangées entre l'équipement client et le point d'accès.

Tout d'abord, lors d'une étape de découverte du point d'accès, l'équipement client écoute la voie radio pour rechercher des trames de gestion spécifiques appelées balises ("BEACON" en anglais). L'équipement client examine les informations contenues dans ce type de trame, par exemple un identifiant de réseau (ou "ESSID", de l'anglais "Extended Service Set Identifier"), souvent abrégé par "SSID" pour lequel le point d'accès est configuré, ou un identifiant du point d'accès "BSSID" (de l'anglais "Basic Set Service Identifier") qui est l'adresse "MAC" (de l'anglais "Media Access Control"), ou des paramètres propres au réseau déployé. Un point d'accès peut être configuré pour plusieurs réseaux différents et émettre les SSID correspondant à ces différents réseaux dans des trames BEACON successives. L'équipement client envoie également des trames de recherche de point d'accès ("PROBE REQUEST" en anglais). Ces trames de gestion comprennent l'identifiant, ou SSID, du réseau recherché. Le ou les points d'accès concernés répondent à ces trames de recherche en renvoyant une trame de réponse à la recherche ("PROBE RESPONSE" en anglais) signalant leur présence. La trame de réponse à la recherche comprend dans son entête l'identifiant du point d'accès, ou BSSID, qui a émis la trame.

Le client peut alors sélectionner un point d'accès en fonction de critères de décision qu'il détient et envoyer une trame de demande d'authentification ("AUTHENTICATION REQUEST" en anglais). Le point d'accès renvoie une réponse d'authentification ("AUTHENTICATION RESPONSE" en anglais) positive ou négative. Il existe deux types d'authentification, l'une en mode « ouvert », où toute demande est acceptée par défaut, et l'autre en mode de « secret partagé », où la connaissance d'un secret est nécessaire pour s'authentifier auprès du point d'accès. Le mode « ouvert » est typiquement utilisé dans des réseaux ouverts, comme par exemple un réseau hotspot ou un réseau ouvert d'entreprise.

Si l'authentification a réussi, le client demande alors à s'associer au point d'accès en envoyant une trame de demande d'association ("ASSOCIATION REQUEST" en anglais). Le point d'accès renvoie une réponse d'association ("ASSOCIATION RESPONSE" en anglais) positive ou négative. Dès lors que l'association est réussie, l'équipement client peut envoyer et recevoir des données au sens courant du terme, par exemple des courriers électroniques, via ce point d'accès.

Le choix d'un point d'accès pour accéder à un réseau est rarement automatique et l'équipement client est amené à choisir un point d'accès parmi ceux qui diffusent l'identifiant du réseau, ou SSID, auquel il souhaite accéder. En outre, l'équipement client qui arrive dans une région géographique qui comprend plusieurs réseaux sans fil d'accès, ne possède aucune connaissance de l'environnement réseau de la région géographique. Ce qui est valable pour le point d'accès est également valable pour d'autres ressources dont aurait besoin l'équipement client : avant d'accéder à une ressource particulière, l'équipement client doit chercher les ressources disponibles et en choisir une qui lui convient.

Ainsi, si un point d'accès illégitime diffuse l'identifiant du réseau auquel l'équipement client souhaite accéder, il existe un risque que l'équipement client choisisse le point d'accès illégitime. Ce risque est important dans le cas d'un réseau d'accès sans fil de type hotspot. En effet, le réseau étant dans un lieu public, l'équipement client n'a a priori pas connaissance de toute l'infrastructure présente derrière cet accès sans fil. Une fois l'attachement à ce point d'accès illégitime effectué, il est facile pour un pirate qui supervise ce point d'accès d'obtenir de l'équipement client des informations confidentielles, par exemple des données d'identification et d'authentification de l'utilisateur de l'équipement client. Un autre exemple se trouve dans le document US2005/054369.

La présente invention permet de pallier tout ou partie des inconvénients cités. A cette fin, l'invention concerne un serveur descripteur de région pour un groupe de réseaux sans fil, ledit groupe comprenant au moins un réseau sans fil d'une région géographique où se situe un équipement client, ledit serveur étant caractérisé en ce qu'il comporte des moyens pour envoyer à l'équipement client, en réponse à une requête, une description dudit au moins un réseau sans fil dudit groupe, ladite description comprenant le nom dudit réseau sans fil et un texte d'information relatif audit réseau sans fil.

Un serveur descripteur de région recense toutes les informations pertinentes relatives à des réseaux sans fil localisés dans une région qu'il administre. En particulier, est stocké sur le serveur de région, pour chaque réseau sans fil présent dans la région géographique, un texte d'information sur les réseaux sans fil, utile à l'équipement client pour sélectionner un réseau sans fil particulier pour l'accès de l'équipement client au réseau. Par exemple les informations précisent l'opérateur de télécommunications qui gère le réseau sans fil, les algorithmes de sécurité utilisés pour assurer la confidentialité des échanges sur la voie radio, des paramètres de performance, voire un message publicitaire.

Le serveur descripteur de région administre une région géographique. Il agit comme un mandataire de confiance pour les équipements clients qui arrivent dans la région géographique. Ainsi, des réseaux sans fil localisés dans la région géographique administrée par le serveur descripteur de région sont préalablement enregistrés lors d'une procédure administrative non décrite. Cette procédure administrative garantit l'exactitude et l'authenticité des informations qui sont distribuées par le serveur. Cette procédure préalable non décrite se fait avantageusement de manière sécurisée, par différentes méthodes connues non décrites basées par exemple sur de la cryptographie à clé publique, ou sur un secret partagé. En outre, cette procédure préalable est réalisée par des personnes de confiance, par exemple, les opérateurs des réseaux sans fil.

Les aspects interconnexion entre le serveur de région et les réseaux sans fil, notamment pour obtenir desdits réseaux sans fil les informations de confiance, concernent des aspects architecturaux qui ne seront pas décrits dans le cadre de la présente invention.

Ainsi, le serveur dispose des descriptions de tous les réseaux sans fil de la région géographique et l'équipement client, en interrogeant le serveur, dispose alors aussi de ces descriptions. L'équipement client a la garantie que les réseaux sans fil listés par le serveur sont des réseaux sans fil légitimes.

Le serveur de région permet à un équipement client d'obtenir la description de tous les réseaux sans fil présents dans la région géographique administrée par le serveur. Ainsi, dans le cas d'un réseau sans fil de type IEEE 802.11, un équipement client qui arrive dans une région géographique où sont présents de nombreux réseaux sans fil n'a pas à émettre des trames de gestion classiques de recherche de point d'accès, ou trames "PROBE REQUEST". De même, les points d'accès de la région géographique n'ont pas à émettre, à des périodes de temps qui peuvent être très courtes, des trames de présence, ou trames "BEACON". Lorsque de nombreux points d'accès et équipements clients émettent de telles trames, celles-ci, très nombreuses saturent la voie radio, ce qui impacte les performances des réseaux sans fil et la réception radio au niveau des équipements clients.

On notera que l'invention tire son origine d'un problème de sélection d'un réseau sans fil dans un réseau de type IEEE 802.11. Toutefois, l'invention s'applique également à d'autres types de réseaux de télécommunications sans fil, comme les réseaux de type WiMax, ou UMTS.

Dans un mode particulier de réalisation de l'invention, le serveur comprend en outre des moyens de stockage de la description dudit au moins un réseau sans fil.

L'invention concerne aussi un ensemble structuré de données apte à être lu par un serveur descripteur de région pour un groupe de réseaux sans fil, ledit groupe comprenant au moins un réseau sans fil d'une région géographique, ledit ensemble structuré de données étant caractérisé en ce qu'il comporte un champ de description dudit au moins un réseau sans fil du groupe, la description dudit réseau sans fil comprenant le nom dudit réseau sans fil et un texte d'information relatif audit réseau sans fil.

L'invention utilise un ensemble structuré de données qui offre aux équipements clients des informations de confiance sur les réseaux sans fil de la région géographique, en particulier une description de tous les réseaux sans fil de la région qui permet à un équipement client de faire le choix du réseau sans fil le plus approprié. De façon avantageuse, l'ensemble structuré de données s'appuie en partie sur une structure de type DNS. Ainsi, l'invention bénéficie d'une norme qui, dans sa version sécurisée (DNSSEC) offre des fonctions de sécurité qui sont l'authentification de l'origine de données reçues en réponse à des requêtes, et l'intégrité de ces données.

Avantageusement, l'ensemble structuré de données selon l'invention comprend en outre :
- un champ associant le nom dudit réseau sans fil à un identifiant de routage dudit réseau sans fil,
- un champ décrivant des paramètres dudit réseau sans fil,
- un champ définissant une période au terme de laquelle la validité de l'ensemble structuré de données est vérifiée.

Avantageusement l'ensemble structuré de données inclut un champ CHECK qui permet des mises à jour périodiques. Dans ce mode de réalisation, la mise à jour se fait à l'initiative du serveur descripteur de région et a pour but de vérifier que les informations contenues dans l'ensemble structuré de données sont toujours valides. Le serveur demande aux réseaux sans fil de la région une mise à jour des paramètres desdits réseaux qu'il stocke, par exemple des paramètres de performance des réseaux sans fil. Ainsi, les paramètres qui sont stockés sur le serveur sont toujours à jour et un équipement client qui veut accéder à un réseau sans fil, choisira un réseau sans fil en toute connaissance de cause, à partir de paramètres mis à jour récemment.

En outre, le fichier de zone comprend des informations redondantes puisqu'il permet de retrouver, à partir d'un nom de réseau, l'identifiant de ce réseau et également, à partir de l'identifiant d'un réseau, le nom de ce réseau et ses paramètres. Une interrogation du fichier basée sur l'identifiant du réseau permet d'authentifier le réseau qui envoie un message, ce qui est très avantageux dans des environnements où les cas d'usurpation d'identité sont à craindre.

Enfin, l'ensemble structuré de données comprend les paramètres des réseaux sans fil nécessaires pour accéder audit réseau. L'équipement client n'a ainsi pas à récupérer ces paramètres sur la voie radio.

L'invention concerne aussi un procédé de traitement de requêtes relatives à un descripteur de région pour un groupe de réseaux sans fil, ledit groupe comprenant au moins un réseau sans fil d'une région géographique où se situe un équipement client. Le procédé est caractérisé en ce qu'il comporte une étape d'envoi à l'équipement client en réponse à une première requête d'une description dudit au moins un réseau sans fil du groupe, ladite description comprenant le nom dudit réseau sans fil et un texte d'information relatif audit réseau sans fil.

De manière avantageuse, le procédé de traitement de requêtes permet à un équipement client d'obtenir toutes les informations des réseaux sans fil présents dans la zone géographique, en particulier les descriptions de ces réseaux qui permettent de choisir le réseau sans fil le plus approprié pour accéder au réseau. Ainsi, l'équipement client, qui arrive dans une région géographique n'a pas à rechercher lui-même les réseaux sans fil présents dans la région géographique au risque de tomber sur des réseaux sans fil illégitimes. De plus, les descriptions des réseaux sans fil de la région qu'il récupère lui permettent de sélectionner au mieux son réseau sans fil, en fonction de ses besoins, par exemple des besoins de performance ou de sécurité. En outre, les informations étant envoyées par un serveur de confiance, l'équipement client est assuré que les informations qu'il reçoit sur les réseaux sans fil de la région géographiques concernent des réseaux sans fil et des points d'accès légitimes.>

De façon avantageuse, la procédé de traitement de requêtes selon l'invention comprend en outre une étape d'envoi à l'équipement client, en réponse à une deuxième requête, d'au moins un identifiant de routage d'un réseau sans fil sélectionné dans ledit groupe, ledit identifiant étant nécessaire pour accéder audit réseau sans fil sélectionné.

L'équipement client qui reçoit les paramètres du réseau sans fil qu'il a sélectionné n'a ainsi pas besoin de récupérer auprès du point d'accès, par le biais de trames de gestion qu'il enverrait sur la voie radio, les paramètres nécessaires pour son accès au réseau. Cela évite de surcharger la voie radio.

L'invention concerne également un procédé de mise à jour d'un ensemble structuré de données d'un serveur descripteur de région pour un groupe de réseaux sans fil, ledit groupe comprenant au moins un réseau sans fil d'une région géographique, ledit procédé étant caractérisé en ce qu'il comprend une étape de mise à jour d'au moins un paramètre relatif audit au moins un réseau sans fil d'un groupe.

L'ensemble structuré de données du serveur a été créé pendant une phase administrative, au cours de laquelle les réseaux sans fil de la région géographique se sont fait référencer. Ce référencement initial, effectué de manière sécurisée garantit que le serveur descripteur agit comme un mandataire de confiance pour les équipements clients. Ainsi, les mises à jour ultérieures de l'ensemble structuré de données, faites de manière sécurisée garantissent que les données fournies par le serveur demeurent authentiques.

Dans un mode de réalisation de l'invention, l'étape de mise à jour est consécutive à une demande de mise à jour périodique du serveur descripteur de région.

Dans un mode de réalisation de l'invention, l'étape de mise à jour est consécutive à un envoi spontané d'une mise à jour du paramètre du réseau sans fil.

L'invention concerne aussi un procédé de sélection d'un réseau sans fil parmi un groupe de réseaux sans fil, ledit groupe comprenant au moins un réseau sans fil d'une région géographique, le procédé étant caractérisé en ce qu'il comprend une étape de sélection d'un réseau sans fil dans le groupe, une description dudit au moins un réseau sans fil du groupe étant reçue d'un serveur descripteur de région en réponse à une première requête, ladite description dudit réseau sans fil comprenant le nom dudit réseau sans fil et un texte d'information relatif audit réseau sans fil.

De Façon avantageuse, le procédé de sélection selon l'invention, comprend en outre une étape de réception du serveur descripteur de région, en réponse à une deuxième requête, d'un identifiant dudit réseau sans fil sélectionné, ledit identifiant étant nécessaire pour accéder audit réseau sans fil.

L'équipement client peut, grâce à la deuxième requête, et après avoir obtenu la liste des réseaux sans fil présents dans la zone géographique avec la première requête et après avoir sélectionné un réseau sans fil, obtenir les informations nécessaires pour accéder au réseau sans fil qu'il a sélectionné. Ces informations sont des informations de connectivité IP. Dans le cas d'un réseau sans fil de type 802.11 accédé par un point d'accès, il s'agit de l'adresse MAC (Media Access Control) du point d'accès et le nom du réseau sans fil, et dans le cas d'un réseau sans fil domestique, de l'adresse IP d'un routeur domestique. Ainsi, ces informations étant transmises par le serveur de région, elles sont réputées être des informations de confiance.

L'invention concerne également un réseau sans fil comprenant des moyens d'envoi à un serveur descripteur de région d'une mise à jour d'informations dudit réseau sans fil, la mise à jour des informations du réseau sans fil étant adaptée pour être stockée sur ledit serveur et envoyée par ledit serveur à au moins un équipement client.

L'invention concerne aussi un équipement client comprenant des moyens de sélection d'un réseau sans fil dans un groupe d'au moins un réseau sans fil, une description dudit au moins un réseau sans fil du groupe étant reçue d'un serveur descripteur de région en réponse à une requête, ladite description dudit réseau sans fil comprenant le nom dudit réseau sans fil et un texte d'information relatif audit réseau sans fil.

L'invention se rapporte également à un programme d'ordinateur sur un support de données et chargeable dans la mémoire interne d'un ordinateur associé à un serveur descripteur de région, le programme comprenant des portions de code pour l'exécution des étapes du procédé de traitement de requête selon l'invention lorsque le programme est exécuté sur ledit ordinateur.

L'invention concerne aussi un moyen de stockage de données partiellement ou totalement amovible, comportant des instructions de code de programme informatique pour l'exécution des étapes du procédé de traitement de requêtes selon l'invention.

L'invention concerne également un programme d'ordinateur sur un support de données et chargeable dans la mémoire interne d'un ordinateur associé à un équipement client, le programme comprenant des portions de code pour l'exécution des étapes d'un procédé de sélection selon l'invention lorsque le programme est exécuté sur ledit ordinateur.

L'invention concerne aussi un moyen de stockage de données partiellement ou totalement amovible, comportant des instructions de code de programme informatique pour l'exécution des étapes d'un procédé de sélection selon l'invention.

De nombreux détails et avantages de l'invention seront mieux compris à la lecture de la description d'un mode particulier de réalisation en référence aux schémas annexés donnés à titre non limitatif et dans lesquels :
La figure 1 est une représentation schématique d'une architecture dans laquelle l'invention est mise en oeuvre.
Les figures 2a et 2b sont des organigrammes présentant les étapes d'un procédé de sélection d'un réseau sans fil selon l'invention, la figure 2a présentant les étapes du procédé au niveau de l'équipement client et la figure 2b présentant les étapes du procédé au niveau du serveur descripteur de région.
La figure 3 est un organigramme qui présente les étapes de mise à jour d'un ensemble structuré de données selon l'invention au niveau du serveur descripteur de région.
La figure 4 présente un exemple d'ensemble structuré de données selon l'invention.

L'architecture de réseau sur laquelle est basée Internet et la plupart des réseaux locaux actuels utilise des adresses IP (de l'anglais "Internet Protocol") numériques. Pour faciliter la lecture de ces adresses par l'homme, un système connu, appelé "DNS" (de l'anglais "Domain Name System") permet de faire la correspondance entre les adresses numériques et des noms plus compréhensibles et faciles à retenir, appelés noms de domaine ou "FQDN" (de l'anglais "Fully Qualified Domain Name"), par exemple www.monsite.fr, et plus généralement de trouver une information à partir du nom de domaine. Pour effectuer une telle correspondance, on utilise des serveurs conformes au protocole DNS, appelés serveur DNS. Un serveur DNS héberge des données relatives à des noms de domaine. Le protocole DNS fonctionne suivant un système de requêtes entre des clients et des serveurs.

Le système DNS est un système de bases de données réparties. Ainsi, un serveur DNS s'occupe en général d'un domaine limité, ou zone, et s'occupe de transmettre les requêtes à d'autres serveurs s'il ne connaît pas la réponse. L'ensemble des données au sein d'un serveur sont stockées dans un fichier que l'on appelle fichier de zone.

Un fichier de zone contient des enregistrements relatifs à des noms de domaine. D'une manière générale, un enregistrement DNS comprend un nom de domaine (ou "FQDN", de l'anglais "Fully Qualified Domain Name") ou nom d'hôte, une classe, un type et une valeur. La classe est par exemple "IN" pour le protocole Internet. De nombreux types DNS existent. A titre d'exemple non limitatifs on peut citer :
- "SOA" (de l'anglais "Start of Authority"), enregistrement qui comprend une description d'un serveur pour un nom de domaine ayant autorité sur la zone ainsi que l'adresse de l'administrateur du serveur. La valeur associée au type SOA est un champ multi-ligne. Il y a un seul enregistrement SOA par zone DNS. Un enregistrement SOA pour un domaine "Movie.edu" est donné ci-dessous à titre d'exemple :
   Movie.edu IN SOA terminator.movie.edu al.robocop.movie .edu (
   1 ; sériai
   10800 ; refresh after 3 hours
   3600 ; retry after 1 hour
   604800 ; expire after 1 week
   86400) ; minimum time to live of 1 day
- "CNAME" (de l'anglais "Canonical Name"), enregistrement pour définir un surnom ou alias. Il associe un nom de domaine à un autre nom de domaine. Un enregistrement CNAME est donné ci-dessous à titre d'exemple :
   wh.movie.edu. IN CNAME wormhole.movie.edu.
- "TXT" pour un texte libre.
- "A" pour faire correspondre un nom d'hôte à une adresse IP version 4. La spécification et l'implémentation des noms de domaine sont décrites de façon complète dans la RFC 1035 issue de l"'IETF" (de l'anglais "Internet Engineering Task Force").

Une évolution connue d'implémentation du système DNS, appelée DNSSEC (de l'anglais "DNS Security Extensions"), accroît la sécurité du système DNS en offrant, outre les fonctionnalités du système DNS, des services de sécurité. Ces services de sécurité permettent à un équipement client qui envoie une requête DNSSEC à un serveur DNSSEC d'authentifier l'origine de données qu'il reçoit en réponse à sa requête, et d'être assuré de l'intégrité de ces données. Le protocole DNSSEC utilise un système à base de clé privée/clé publique afin d'offrir les services de sécurité.

L'invention est décrite ci-après dans son application particulière à un réseau sans fil de type IEEE 802.11. Elle est transposable à tout type de réseaux sans fil, comme des réseaux de type WiMax ou UMTS.

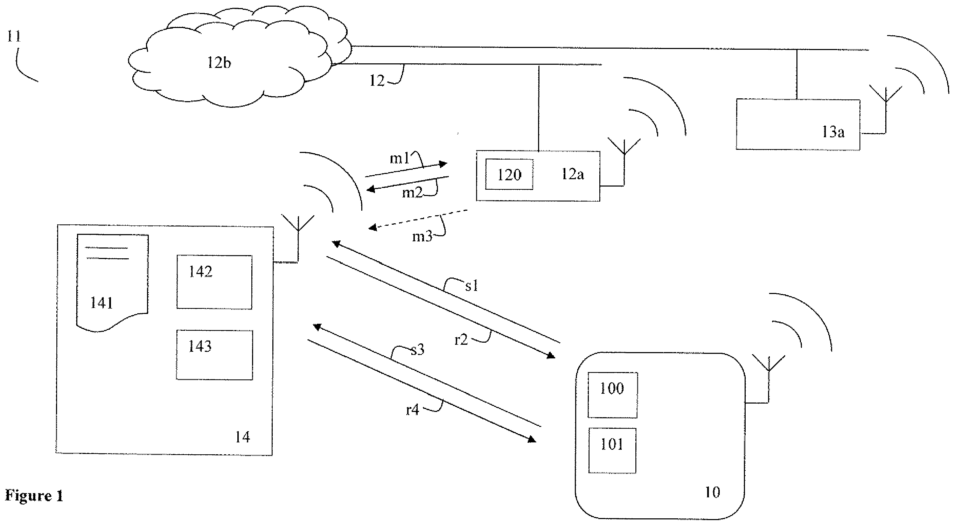

La figure 1 est un exemple d'architecture qui met en oeuvre le procédé selon l'invention.

Un équipement client 10, localisé dans une région géographique 11, se trouve dans une zone de couverture radio d'un groupe de réseaux sans fil constitué par des réseaux sans fil 12 et 13 présents dans la zone géographique 11. Les réseaux sans fil 12, 13 sont par exemple des réseaux hotspot. De manière connue, le réseau sans fil 12, respectivement 13, est caractérisé par un point d'accès 12a, respectivement 13a, et un réseau 12b, respectivement 13b. Le point d'accès 12a, respectivement 13a, est connecté au réseau 12b, respectivement 13b, par une liaison filaire. De manière connue, un réseau sans fil comme le réseau sans fil 12 ou le réseau sans fil 13, est identifié par un identifiant de réseau "SSID" (de l'anglais "Service Set Identifier") et un identifiant de routage du point d'accès "BSSID" (de l'anglais "Basic Set Service Identifier"). Un identifiant de routage habituel de point d'accès est son adresse "MAC" (de l'anglais "Media Access Control"). Les réseaux sans fil 12, 13 sont administrés par des opérateurs de réseau sans fil non représentés.

On identifie les réseaux sans fil 12, 13 de la région géographique 11 par des noms de réseau sans fil de type "FQDN" (de l'anglais "Fully Qualified Domain Name"). Par exemple le réseau sans fil 12 est nommé "monhotspot1.monisp1.fr", et le réseau sans fil 13 est nommé "monhotspot2.monisp2. fr".

Un serveur 14 descripteur de région selon l'invention est agencé pour fournir à l'équipement client 10 une description du groupe de réseaux sans fil présents dans la zone géographique 11. Le groupe de réseaux sans fil comprend les réseaux sans fil 12, 13 auxquels l'équipement client est susceptible d'accéder. La description du groupe de réseaux sans fil permet à l'équipement client 10 de sélectionner le réseau sans fil 12 ou le réseau sans fil 13 auquel accéder. Le serveur 14 descripteur de région est également agencé pour fournir à l'équipement client 10 des paramètres du réseau sans fil 12 ou 13 que l'équipement client a sélectionné. Les paramètres comprennent au moins les paramètres du réseau sans fil nécessaires pour accéder audit réseau sans fil 12 ou 13 sélectionné.

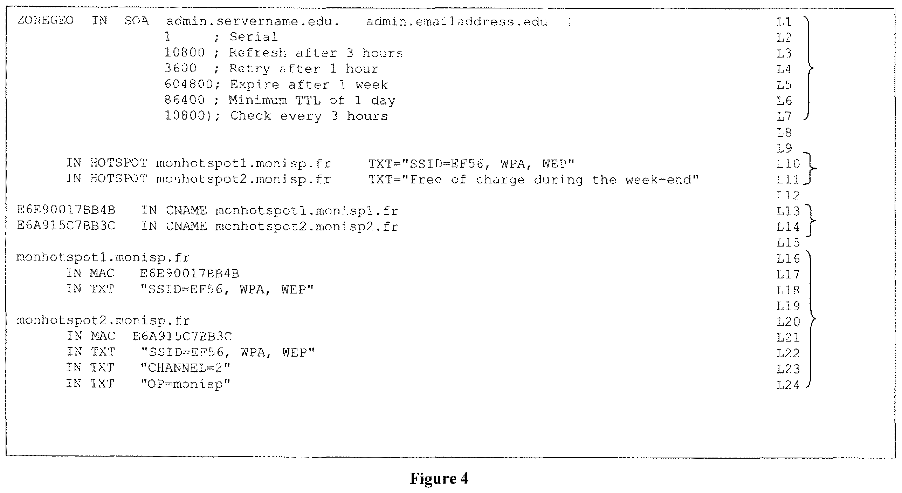

Le serveur 14 comprend un ensemble structuré de données 141 dédié à la région géographique 11 administrée par le serveur 14 de région géographique. Un exemple d'ensemble structuré de données 141 est fourni figure 4. L'ensemble structuré de données 141 comprend une description du groupe de réseaux sans fil 12, 13 qui précise, pour chacun des réseaux sans fil 12, 13 de la région géographique 11, le nom du réseau sans fil, par exemple "monhotspot1.monisp1.fr", et un texte d'information relatif audit réseau sans fil. Le texte d'information comprend aussi bien des valeurs de paramètres de configuration des réseaux sans fil 12, 13, qu'un message informatif. Par exemple, le texte d'information relatif audit réseau sans fil comprend le nom d'algorithmes de sécurité supportés par le réseau sans fil pour garantir la sécurité d'échanges d'informations entre l'équipement client et le réseau sans fil, comme "WPA" (de l'anglais "WiFi Protected Access"). Dans un autre exemple, le texte comprend un message publicitaire qui émane de l'opérateur en charge de l'administration dudit réseau sans fil.

Les descriptions des réseaux sans fil 12, 13 du groupe de réseaux sans fil de la région géographique 11 sont adaptées pour permettre à un utilisateur de l'équipement client de sélectionner à partir des descriptions des réseaux sans fil du groupe de réseaux sans fil, un réseau sans fil pour son accès au réseau.

L'ensemble 141 structuré de données comprend également une partie associant pour chaque réseau sans fil 12, 13 du groupe de réseaux sans fil, le nom du réseau sans fil à un identifiant de routage dudit réseau sans fil. L'identifiant de routage dudit réseau sans fil 12, 13 est une information de routage, par exemple l'adresse MAC du point d'accès 12a, 13a.

L'ensemble structuré de données 141 comprend également pour chaque réseau sans fil 12, 13 du groupe de réseaux sans fil des paramètres dudit réseau sans fil qui comprennent au moins les paramètres de configuration dudit réseau sans fil nécessaires pour accéder audit réseau.

Le serveur 14 descripteur de région comprend également des moyens 142 de traitement de requêtes en provenance de l'équipement client 10. Les moyens 142 sont agencés pour recevoir de l'équipement client 10 des requêtes s1, s3 et pour envoyer à l'équipement client 10 des réponses r2, r4 auxdites requêtes. En réponse à une requête s1 émanant de l'équipement client 10 et demandant la description du groupe de réseaux sans fil de la région géographique 11, les moyens 142 de traitement de requêtes du serveur 14 descripteur de région envoient dans la réponse r2 la description des réseaux sans fil 12, 13 du groupe de réseaux sans fil de la région géographique. La description d'un réseau sans fil comprend le nom du réseau sans fil, par exemple monhotspot1.monisp1.fr, et un texte d'information, par exemple, une liste de paramètres relatifs au réseau sans fil. La description des réseaux sans fil est adaptée pour fournir à l'équipement client 10 un minimum d'informations sur les réseaux sans fil présents dans la région géographique 11 afin que celui-ci sélectionne un réseau sans fil pour accéder au réseau.

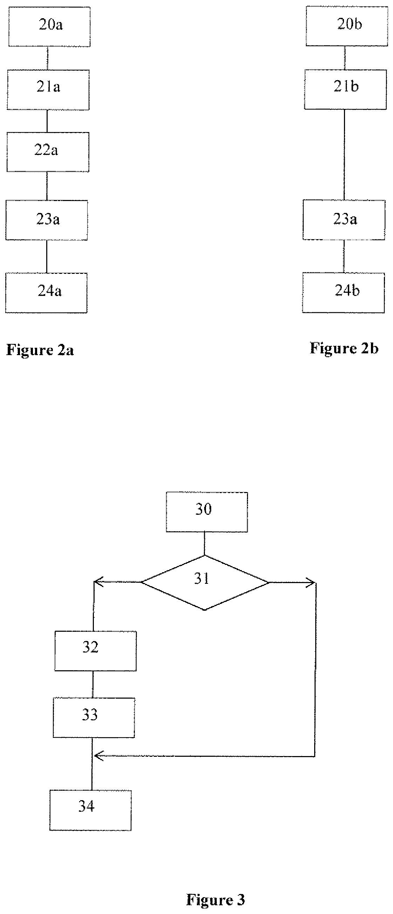

Le serveur 14 descripteur de région comprend également des moyens 143 de mise à jour de l'ensemble structuré de données 141. Les moyens 143 de mise à jour sont agencés pour envoyer aux points d'accès 12a, 13a des réseaux sans fil 12, 13 des demandes périodiques m1 de mise à jour des informations de l'ensemble structuré de données 141 qui concernent le réseau sans fil 12, 13 dont le point d'accès 12a, 13a fait partie. Les moyens 143 sont agencés pour recevoir du point d'accès 12a du réseau sans fil 12 des réponses m2 aux demandes périodiques m1 de mise à jour, et pour mettre à jour l'ensemble structuré de données 141 conformément au procédé de mise à jour décrit avec la figure 3.

Dans un mode de mise à jour particulier de l'ensemble 141 structuré de données, les moyens 143 de mise à jour sont agencés pour recevoir du point d'accès 12a, une mise à jour m3 des informations qui concernent le réseau sans fil 12, la mise à jour m3 étant envoyée de manière spontanée par le point d'accès 12a. Afin de ne pas surcharger la figure, seules une demande périodique m1 à destination du point d'accès 12a et une réponse m2 en provenance du point d'accès 12a sont représentées. De tels échanges ont bien évidemment lieu entre le serveur 14 et le point d'accès 13a du réseau sans fil 13.

L'équipement client 10 comprend des moyens 100 de sélection d'un réseau sans fil dans le groupe de réseaux sans fil présents dans la région géographique 11. Les moyens 100 de sélection sont agencés pour sélectionner parmi les réseaux sans fil 12, 13 présents dans la zone géographique 11, un réseau sans fil en vue d'accéder au réseau, selon un procédé de sélection décrit avec les figures 2a et 2b. Les moyens 100 de sélection sont agencés pour obtenir également des paramètres du réseau sans fil sélectionné, dont les paramètres nécessaires pour accéder audit réseau sans fil. Une fois un réseau sans fil 12 ou 13 sélectionné, l'équipement client 10 s'attache au point d'accès 12a ou 13a du réseau sans fil sélectionnée, selon la procédure classique d'attachement. Pour obtenir les informations relatives aux réseaux sans fil présents dans la zone géographique afin de sélectionner un réseau sans fil pour accéder au réseau, et pour obtenir les paramètres du réseau sans fil afin d'accéder audit réseau sans fil, les moyens 100 de sélection communiquent avec des moyens 101 de gestion de requêtes. Les moyens 101 de gestion de requêtes sont agencés pour émettre les requêtes s1, s3 aux moyens 142 du serveur 14 descripteur de région, et pour recevoir les réponses r2, r3 auxdites requêtes. Les moyens 101 de gestion de requêtes sont agencés pour obtenir des moyens 142 du serveur 14 descripteur de région, la description des réseaux sans fil présents dans la zone géographique et les paramètres du réseau sans fil sélectionné par les moyens 100 de sélection, lesdits paramètres étant nécessaires à l'équipement client pour s'attacher audit point d'accès. La façon dont l'équipement client 10 accède au serveur 14 descripteur de région sort du cadre de la présente invention.

Le point d'accès 12a comprend des moyens 120 de mise à jour, agencés pour renvoyer au serveur 14 descripteur de région, une réponse m2 à une requête périodique de mise à jour m1. La réponse m2 comprend des valeurs de paramètres du point d'accès 12a. La valeur des paramètres est celle qu'ont les paramètres au moment où le point d'accès reçoit la demande m1 de mise à jour. Dans une réalisation particulière de l'invention, les moyens 120 de mise à jour sont agencés également pour envoyer de manière spontanée des mises à jour m3 au serveur 14 descripteur de région. Le point d'accès 13a comprend également des moyens de mise à jour comparables aux moyens 120 de mise à jour du point d'accès 12a. Pour ne pas surcharger la figure, ils ne sont pas représentés.

Dans le mode de réalisation décrit, les réseaux sans fil sont de même type, ici 802.11. L'invention n'est pas limitée par les types de réseaux qui coexistent et pour lesquels le serveur 14 descripteur de région fournit des informations de confiance. Ainsi, dans des réalisations alternatives de l'invention, la région géographique 11 comprend des réseaux sans fil de types différents, par exemple, UMTS, WiMax, 802.11, et le serveur 14 descripteur de région comprend des informations de confiance relatives à ces réseaux de différents types.

Dans un deuxième mode de réalisation de l'invention, l'architecture comprend des équipements terminaux domestiques de connexion haut-débit, fournis par un ou plusieurs fournisseurs d'accès à Internet. Ces équipements terminaux domestiques sont situés par exemple dans des appartements d'un immeuble qui constitue la région géographique selon l'invention. L'identifiant de routage d'un tel équipement domestique est une adresse IP.

Les figures 2a et 2b, décrites ensemble, présentent les étapes du procédé de sélection par l'équipement client 10 d'un réseau sans fil dans un groupe de réseaux sans fil selon l'invention. La figure 2a présente les étapes au niveau de l'équipement client 10, la figure 2b présente les étapes au niveau du serveur 14 descripteur de région.

Dans une étape initiale 20a l'équipement client 10 selon la figure 1, qui arrive dans la région géographique 11, envoie une première requête s1 au serveur 14 descripteur de région en vue d'obtenir une description de tous les réseaux sans fil présents dans la zone géographique 11.

La requête s1 est reçue par le serveur 14 dans une étape 20b. Dans une étape 21b, consécutive à la réception de s1, le serveur 14 envoie la description des réseaux sans fil de la région géographique. La description figure dans l'ensemble structuré de données 141 selon la figure 1.

Dans une étape 21a, consécutive à l'envoi par l'équipement client de la première requête s1, l'équipement client 10 reçoit du serveur 14 descripteur de région la description des réseaux sans fil de la région géographique dans la réponse r2. La description comprend, pour chaque réseau sans fil de la région le nom du réseau sans fil et un texte d'information qui fournit des caractéristiques du réseau sans fil. Le texte d'information aide l'équipement client 10 à sélectionner un réseau sans fil parmi ceux présents dans la zone géographique.

Dans une étape 22a, consécutive à la réception par l'équipement client 10 de la description des réseaux sans fil à l'étape 21a, l'utilisateur de l'équipement client 10 sélectionne parmi les réseaux sans fil présents dans la zone géographique et pour lesquels il a reçu une description, un réseau sans fil particulier pour son accès au réseau. Dans une réalisation alternative de l'invention, l'étape de sélection 22a est effectuée automatiquement par l'équipement client. Ainsi, l'équipement client peut être paramétré pour sélectionner un point d'accès d'un opérateur particulier.

Dans une étape 23a, consécutive à la sélection par l'utilisateur de l'équipement client 10 d'un réseau sans fil parmi les réseaux sans fil de la zone géographique, l'équipement client envoie la requête s3 de demande au serveur 14 descripteur de région des paramètres du réseau sans fil sélectionné.

Dans une étape 23b, le serveur 14 descripteur de région reçoit la requête s3 de l'équipement client 10. Dans une étape 24b, consécutive à la réception de la requête s3, le serveur 14 descripteur de région renvoie dans la réponse r4, les paramètres du réseau sans fil sélectionné. Ces paramètres sont stockés dans l'ensemble structuré de données 141. Parmi les paramètres du réseau sans fil figurent les paramètres nécessaires à l'équipement client 10 pour accéder au réseau. Dans le cas de l'architecture décrite avec la figure 1, si le réseau sans fil sélectionné est le réseau 12, les paramètres nécessaires pour accéder audit réseau 12 sont l'identifiant du réseau 12 et l'identifiant du point d'accès 12a.

Dans une étape 24a, consécutive à l'envoi par l'équipement client de la requête s2 de demande des paramètres propres au réseau sans fil sélectionné, l'équipement client 10 reçoit du serveur 14 de région géographique les paramètres du réseau sans fil sélectionné dans la réponse r4.

L'équipement client 10 peut alors s'attacher au point d'accès du réseau sans fil qu'il a sélectionné selon la procédure classique d'attachement pour accéder au réseau.

La figure 3 présente les étapes du procédé de mise à jour des informations stockées dans l'ensemble 141 structuré de données du serveur 14 de région géographique selon l'invention.

Dans une étape initiale 30 d'attente, le serveur 14 de région géographique est en attente d'une mise à jour des informations qu'il stocke dans l'ensemble 141 structuré de données et qui concernent les réseaux sans fil de la région géographique 11 qu'il gère.

Dans une étape de test 31, consécutive à un événement qui met fin à l'étape d'attente 30, il est procédé à un test afin de savoir si l'événement correspond à la réception d'un message m3 de mise à jour des informations du réseau sans fil 12 envoyé de façon spontanée par le point d'accès 12a du réseau sans fil 12, ou si une période au terme de laquelle la validité de l'ensemble 141 structuré de données stocké sur le serveur 14 descripteur de région doit être vérifiée, s'est terminée.

Si le test effectué à l'étape 31 indique que la période au terme de laquelle la validité de l'ensemble 141 structuré de données doit être vérifiée s'est terminée, alors, dans une étape 32, le serveur 14 descripteur de région envoie la demande périodique m1 de mise à jour des informations au point d'accès 12a du réseau sans fil 12 du groupe de réseaux sans fil de la région géographique. La demande de mise à jour m1 est envoyée à tous les points d'accès des réseaux sans fil du groupe de réseaux sans fil de la région géographique, en mode diffusion (le terme couramment utilisé est le terme anglais "broadcast"), ou à destination de chacun des points d'accès (on parle de mode "unicast" en anglais). De façon avantageuse, la demande de mise à jour m1 comprend une vérification que le point d'accès 12a est toujours en fonctionnement, ou vivant.

Dans une étape 33, consécutive à l'envoi de la demande m1 de mise à jour des informations qui concernent le réseau sans fil 12, le serveur 14 descripteur de région, reçoit la réponse m2 qui comprend une mise à jour des informations relatives au réseau sans fil 12. La mise à jour m2 concerne aussi bien la description que les paramètres du réseau sans fil 12. Dans un mode de fonctionnement particulier où le point d'accès 12 n'est plus vivant, la vérification que le point d'accès 12a est toujours vivant n'ayant pas donné de réponse positive, les informations relatives au réseau sans fil 12 présentes dans l'ensemble 141 structuré de données sont soit supprimées, soit il est précisé explicitement dans l'ensemble 141 structuré de données pour le réseau sans fil 12 qu'il n'est pas vivant.

Dans une étape 34, consécutive à la réception de la mise à jour m2 à l'étape 33, ou si le test effectué à l'étape 31 indique qu'un message m3 de mise à jour a été envoyé de façon spontanée par point d'accès 12a du réseau sans fil, il est procédé à la mise à jour de l'ensemble 141 structuré de données à partir de la mise à jour m2 ou m3 reçue du point d'accès 12a du réseau sans fil 12.

De façon avantageuse, la réponse m2 envoyée par le point d'accès 12a à en réponse à la requête m1, ou le message m3 de mise à jour envoyé spontanément par le point d'accès 12a, sont conformes à une requête DNS classique de mise à jour DNS "nsupdate".

La figure 4 est un exemple d'ensemble 141 structuré de données selon l'invention pour la région géographique gérée par le serveur 14 descripteur de région.

L'ensemble structuré de données 141 est agencé pour stocker des informations relatives à des réseaux sans fil d'un groupe de réseaux sans fil présents dans la région géographique 11, et pour fournir à une équipement client 10 qui arrive dans la région géographique la description des réseaux sans fil du groupe et les paramètres d'un réseau sans fil que l'équipement client aura sélectionné pour accéder au réseau. Le stockage initial des informations dans l'ensemble 141 structuré de données se fait dans une phase administrative préalable d'inscription d'un réseau sans fil auprès du serveur 14. Cette inscription administrative se fait de manière sécurisée afin de garantir l'authenticité et l'intégrité des informations fournies par un réseau sans fil, et l'authenticité dudit réseau sans fil. Ainsi, avec cette phase préalable administrative sécurisée, on est assuré que les informations relatives à des réseaux sans fil d'une région géographique sont des informations de confiance.

L'ensemble structuré de données 141 est composé de lignes. Pour des raisons de lisibilité, les lignes ont été numérotées sur la figure L1 à L24.

L'ensemble structuré de données 141 est découpé en 4 parties :
- une première partie, allant des lignes L1 à L7,
- une deuxième partie, allant des lignes L10 à L11,
- une troisième partie, allant des lignes L13 à L14, et
- une quatrième partie, allant des lignes L16 à L24.

La première partie, introduite par le mot-clé "SOA" correspond à une description de la région géographique appelée "ZONEGEO"; elle est comparable à la description d'un nom de domaine d'un fichier DNS. Cette première partie comprend un ensemble d'entrées, entre parenthèses. Elle varie par rapport à un fichier DNS classique en ce qu'elle décrit une région géographique ZONEGEO plutôt qu'un nom de domaine, et en ce qu'elle comprend un dernier champ "CHECK", valorisé ici à 10800 secondes qui n'est pas défini dans un fichier DNS classique. Ce nouveau champ CHECK définit une période au terme de laquelle il est vérifié si l'ensemble structuré de données est encore valide, c'est-à-dire si les informations relatives aux réseaux sans fil du groupe de réseaux sans fil qu'il contient sont valides. Cette vérification est effectuée conformément au procédé décrit avec la figure 3. Par exemple, si l'ensemble structuré de données comprend, pour un réseau sans fil particulier une indication du débit supporté par ce réseau, la mise à jour d'une telle valeur est pertinente puisque celle-ci est susceptible de changer selon le nombre d'équipements clients qui accèdent audit réseau sans fil.

La deuxième partie comprend la description des réseaux sans fil du groupe de réseaux sans fil de la région géographique ZONEGEO. A cette fin, un enregistrement "HOTSPOT" spécifique à l'invention est introduit. Ce champ fournit une description d'un réseau sans fil. Il comprend le nom du réseau sans fil ou FQDN, par exemple "monhotspot1.monisp1.fr", et un texte informatif introduit par l'enregistrement "TXT".

La troisième partie utilise l'enregistrement "CNAME" pour associer à un nom de réseau sans fil, par exemple "monhotspot1.monisp1.fr" un identifiant de routage du point d'accès au réseau sans fil, comme l'adresse MAC du point d'accès qui est "E6E90017BB4B" pour "monhotspot1.monisp1.fr". De façon avantageuse, l'association de l'identifiant de routage du point d'accès au nom du réseau sans fil offre la possibilité d'obtenir des informations relatives à un réseau sans fil de deux façons : par le biais du nom du réseau sans fil, et par le biais de l'identifiant de routage. En outre, lorsque le serveur 14 de région reçoit un message comprenant un identifiant de la source qui a émis ledit message, le serveur 14 peut vérifier si le message provient d'un réseau sans fil de confiance qui s'est enregistré auprès de lui.

Enfin la quatrième partie comprend, pour chacun des réseaux sans fil de la région géographique, des paramètres dudit réseau sans fil, en particulier les paramètres nécessaires à l'équipement client 10 pour accéder audit réseau sans fil. Par exemple, pour le réseau sans fil monhotspot1.monisp1.fr, les paramètres nécessaires sont l'adresse MAC du point d'accès du réseau sans fil "E6E90017BB3C", et l'identifiant du réseau, ou SSID "EF56".

De nombreux paramètres du réseau sans fil peuvent figurer dans la quatrième partie de l'ensemble structuré de données. A titre d'exemple non limitatif, les paramètres du réseau sans fil comprennent, outre l'identifiant de routage et le nom du réseau ou SSID, indispensables pour accéder audit réseau sans fil, des paramètres de sécurité, comme le nom de normes ou de protocoles de sécurité supportés par le point d'accès, par exemple "WPA" (de l'anglais "WiFi Protected Access"), "WEP" (de l'anglais "Wireless Equivalent Privacy"), ou/et des clés publiques de couples de clé publique/clé privée utilisés pour la sécurisation d'échanges, des caractéristiques réseau, comme la charge actuelle du point d'accès, le débit courant offert ou le débit maximal supporté, le propriétaire du point d'accès, qui est l'opérateur qui gère le point d'accès, les accords qui existent entre opérateurs, le numéro de canal radio sur lequel le point d'accès émet, ou encore l'identifiant de ressources accessibles dans le réseau sans fil, comme des imprimantes.

La structure et la syntaxe de l'ensemble structuré de données s'inspire très fortement de la structure et de la syntaxe DNS et apporte des éléments spécifiques à l'invention. L'ensemble 141 structuré de données représente une région géographique. D'autre part, l'ensemble 141 structuré de données comprend des informations redondantes dans le sens où il permet d'accéder à des informations relatives à un réseau sans fil de deux façons : grâce au nom du réseau sans fil, ou grâce à l'identifiant de routage dudit réseau sans fil. L'ensemble structuré de données comprend également un champ "CHECK" permettant de mettre à jour périodiquement le contenu dudit ensemble structuré de données. Il définit également un enregistrement HOTSPOT pour définir un réseau sans fil. Enfin, l'ensemble structuré de données comporte des informations hétérogènes dans le sens où il comprend les données relatives à des réseaux sans fil indépendants les uns des autres.

L'ensemble 141 structuré de données bénéficie d'avantages du DNS comme l'utilisation de requêtes de type DNS. L'aspect sécurité inhérent au protocole DNS, dans sa version DNSSEC, est avantageusement utilisé par l'invention. Ainsi, les réponses r2, r4 aux requêtes s1, s3, et la mise à jour m3 selon la figure 1 sont au format DNSSEC.

## Revendications

1. Serveur (14) descripteur de région pour un groupe de réseaux locaux sans fil, ledit groupe comprenant au moins deux réseaux locaux sans fil (12, 13) d'une région géographique (11) où se situe un équipement client (10) sans fil, ledit serveur étant **caractérisé en ce qu'**il comporte des moyens (142) pour envoyer à l'équipement client, en réponse à une requête (s1), une description (r2) desdits au moins deux réseaux locaux sans fil dudit groupe, ladite requête étant au format DNSSEC, Domain Name Server Security Extension, ladite description comprenant le nom desdits réseaux locaux sans fil et un texte d'information relatif audits réseaux locaux sans fil et étant destinée à permettre à l'utilisateur de l'équipement client de sélectionner parmi lesdits réseaux locaux sans fil, un réseau local sans fil particulier pour y accéder.

2. Serveur descripteur selon la revendication 1, comprenant un ensemble (141) structuré de données comprenant la description desdits au moins deux réseaux locaux sans fil, ledit ensemble structuré de données comportant un champ (L10, L11) de description desdits au moins deux réseaux sans fil du groupe, la description desdits réseaux locaux sans fil comprenant le nom desdits réseaux locaux sans fil et le texte d'information relatif auxdits réseaux locaux sans fil.

3. Serveur descripteur selon la revendication 2, comprenant en outre :
- un champ (L13, L14) associant le nom desdits réseaux locaux sans fil à un identifiant de routage desdits réseaux locaux sans fil,
- un champ (L16 à L24) décrivant des paramètres desdits réseaux locaux sans fil,
- un champ (L7) définissant une période au terme de laquelle la validité de l'ensemble structuré de données est vérifiée.

4. Procédé de traitement de requêtes relatives à un serveur descripteur de région pour un groupe de réseaux locaux sans fil, ledit groupe comprenant au moins deux réseaux locaux sans fil d'une région géographique où se situe un équipement client sans fil, le procédé étant **caractérisé en ce qu'**il comporte une étape (21b) d'envoi à l'équipement client sans fil en réponse à une première requête (s1) d'une description desdits au moins deux réseaux locaux sans fil du groupe, ladite description comprenant le nom desdits réseaux locaux sans fil et un texte d'information relatif auxdits réseaux locaux sans fil, ladite première requête étant au format DNSSEC, Domain Name Server Security Extension, pour permettre à l'utilisateur de l'équipement client de sélectionner parmi lesdits réseaux locaux sans fil, un réseau local sans fil particulier pour y accéder.

5. Procédé de traitement de requêtes selon la revendication 4, comprenant en outre une étape (24b) d'envoi à l'équipement client sans fil, en réponse à une deuxième requête (s3), d'au moins un identifiant de routage d'un réseau local sans fil sélectionné dans ledit groupe, ledit identifiant étant nécessaire pour accéder audit réseau local sans fil sélectionné, ladite deuxième requête étant au format DNSSEC.

6. Procédé de traitement de requêtes selon la revendication 4 ou la revendication 5, comprenant une étape (34) de mise à jour d'au moins un paramètre relatif à un desdits au moins deux réseaux locaux sans fil du groupe.

7. Procédé de traitement de requêtes selon la revendication 6, dans lequel l'étape de mise à jour est consécutive à une demande de mise à jour périodique du serveur descripteur de région.

8. Procédé de traitement de requêtes selon la revendication 6, lequel l'étape de mise à jour est consécutive à un envoi spontané d'une mise à jour du paramètre du réseau sans fil.

9. Procédé de traitement de requêtes selon l'une des revendications 4 à 8, comprenant une étape (22a) de sélection par l'utilisateur de l'équipement client sans fil d'un réseau local sans fil dans le groupe, une description desdits au moins deux réseaux locaux sans fil du groupe étant reçue du serveur descripteur de région en réponse à une première requête, ladite description desdits au moins deux réseaux sans fil comprenant le nom desdits au moins deux réseaux sans fil et un texte d'information relatif auxdits au moins deux réseaux sans fil.

10. Procédé de traitement selon la revendication 9, comprenant une étape (24a) de réception du serveur descripteur de région, en réponse à une deuxième requête, d'un identifiant dudit réseau local sans fil sélectionné, ledit identifiant étant nécessaire pour accéder audit réseau sans fil.

11. Equipement client sans fil (10) comprenant des moyens (100) de sélection d'un réseau local sans fil dans un groupe d'au moins deux réseaux locaux sans fil, ladite sélection basée sur une description desdits au moins deux réseaux locaux sans fil du groupe étant reçue d'un serveur descripteur de région en réponse à une requête (s1), ladite description desdits au moins deux réseaux locaux sans fil comprenant le nom desdits au moins deux réseaux sans fil et un texte d'information relatif auxdits au moins deux réseaux sans fil, ladite requête étant au format DNSSEC, Domain Name Server Security Extension.

12. Programme d'ordinateur sur un support de données et chargeable dans la mémoire interne d'un ordinateur associé à un serveur descripteur de région, le programme comprenant des portions de code pour l'exécution des étapes d'un procédé selon l'une quelconque des revendications 4 à 9 lorsque le programme est exécuté sur ledit ordinateur.

13. Moyen de stockage de données partiellement ou totalement amovible, comportant des instructions de code de programme informatique pour l'exécution des étapes d'un procédé de traitement de requêtes selon l'une quelconque des revendications 4 à 9.

14. Programme d'ordinateur sur un support de données et chargeable dans la mémoire interne d'un ordinateur associé à un équipement client sans fil, le programme comprenant des portions de code pour l'exécution des étapes d'un procédé de sélection selon les revendications 9-10 lorsque le programme est exécuté sur ledit ordinateur.

15. Moyen de stockage de données partiellement ou totalement amovible, comportant des instructions de code de programme informatique pour l'exécution des étapes d'un procédé selon les revendications 9-10.

## Patentansprüche

1. Regionsdeskriptoren-Server (14) für eine Gruppe von lokalen drahtlosen Netzwerken, umfassend mindestens zwei lokale drahtlose Netzwerke (12, 13) einer geografischen Region (11), in der sich eine drahtlose Kundenausrüstung (10) befindet, wobei der Server **dadurch gekennzeichnet ist, dass** er Mittel (142) umfasst, um an die Kundenausrüstung als Antwort auf eine Anfrage (s1) eine Beschreibung (r2) der mindestens zwei lokalen drahtlosen Netzwerke der Gruppe zu senden, wobei die Anfrage im DNSSEC-Format, Domain Name Server Security Extension, ist, wobei die Beschreibung den Namen der lokalen drahtlosen Netzwerke und einen Informationstext zu den lokalen drahtlosen Netzwerken umfasst und dazu bestimmt ist, es einem Benutzer der Kundenausrüstung zu ermöglichen, unter den lokalen drahtlosen Netzwerken ein besonderes lokales drahtloses Netzwerk auszuwählen, um darauf zuzugreifen.

2. Deskriptoren-Server nach Anspruch 1, umfassend eine strukturierte Dateneinheit (141), umfassend die Beschreibung der mindestens zwei lokalen drahtlosen Netzwerke, wobei die strukturierte Dateneinheit ein Feld (L10, L11) zur Beschreibung der mindestens zwei drahtlosen Netzwerke der Gruppe umfasst, wobei die Beschreibung der lokalen drahtlosen Netzwerke den Namen der lokalen drahtlosen Netzwerke und den Informationstext zu den lokalen drahtlosen Netzwerken umfasst.

3. Deskriptoren-Server nach Anspruch 2, ferner umfassend:
- ein Feld (L13, L14), das den Namen der lokalen drahtlosen Netzwerke einem Routing-Identifikator der lokalen drahtlosen Netzwerke zuordnet,
- ein Feld (L16 bis L24), das Parameter der lokalen drahtlosen Netzwerke beschreibt,
- ein Feld (L7), das eine Periode definiert, nach der die Gültigkeit der strukturierten Dateneinheit überprüft wird.

4. Verfahren zur Bearbeitung von Anfragen zu einem Regionsdeskriptoren-Server für eine Gruppe von lokalen drahtlosen Netzwerken, wobei die Gruppe mindestens zwei lokale drahtlose Netzwerke umfasst, in der sich eine drahtlose Kundenausrüstung befindet, wobei das Verfahren **dadurch gekennzeichnet ist, dass** es einen Schritt (21b) umfasst, um an die drahtlose Kundenausrüstung als Antwort auf eine erste Anfrage (s1) eine Beschreibung der mindestens zwei lokalen drahtlosen Netzwerke der Gruppe zu senden, wobei die Beschreibung den Namen der lokalen drahtlosen Netzwerke und einen Informationstext zu den lokalen drahtlosen Netzwerken umfasst, wobei die erste Anfrage im DNSSEC-Format, Domain Name Server Security Extension, ist, um es einem Benutzer der Kundenausrüstung zu ermöglichen, unter den lokalen drahtlosen Netzwerken ein besonderes lokales drahtloses Netzwerk auszuwählen, um darauf zuzugreifen.

5. Verfahren zur Bearbeitung von Anfragen nach Anspruch 4, ferner umfassend einen Schritt (24b) des Sendens an die drahtlose Kundenausrüstung als Antwort auf eine zweite Anfrage (s3) mindestens eines Routing-Identifikators eines lokalen drahtlosen Netzwerks, das in der Gruppe ausgewählt ist, wobei der Identifikator notwendig ist, um auf das ausgewählte lokale drahtlose Netzwerk zuzugreifen, wobei die zweite Anfrage im DNSSEC-Format ist.

6. Verfahren zur Bearbeitung von Anfragen nach Anspruch 4 oder Anspruch 5, umfassend einen Schritt (34) der Aktualisierung mindestens eines Parameters, der sich auf eines der mindestens zwei lokalen drahtlosen Netzwerke der Gruppe bezieht.

7. Verfahren zur Bearbeitung von Anfragen nach Anspruch 6, bei dem der Aktualisierungsschritt auf einen periodischen Aktualisierungsbefehl des Regionsdeskriptoren-Servers folgt.

8. Verfahren zur Bearbeitung von Anfragen nach Anspruch 6, bei dem der Aktualisierungsschritt auf ein spontanes Senden einer Aktualisierung des Parameters des drahtlosen Netzwerks folgt.

9. Verfahren zur Bearbeitung von Anfragen nach einem der Ansprüche 4 bis 8, umfassend einen Schritt (22a) der Auswahl eines lokalen drahtlosen Netzwerks in der Gruppe durch den Benutzer der drahtlosen Kundenausrüstung, wobei eine Beschreibung der mindestens zwei lokalen drahtlosen Netzwerke der Gruppe von dem Regionsdeskriptoren-Server als Antwort auf eine erste Anfrage empfangen wird, wobei die Beschreibung der mindestens zwei drahtlosen Netzwerke den Namen der mindestens zwei drahtlosen Netzwerke und einen Informationstext zu den mindestens zwei drahtlosen Netzwerken umfasst.

10. Bearbeitungsverfahren nach Anspruch 9, umfassend einen Schritt (24a) des Empfangs von dem Regionsdeskriptoren-Server als Antwort auf eine zweite Anfrage eines Identifikators des ausgewählten lokalen drahtlosen Netzwerks, wobei der Identifikator notwendig ist, um auf das drahtlose Netzwerk zuzugreifen.

11. Drahtlose Kundenausrüstung (10), umfassend Mittel (100) zur Auswahl eines lokalen drahtlosen Netzwerks in einer Gruppe von mindestens zwei lokalen drahtlosen Netzwerken, wobei die Auswahl, die auf einer Beschreibung der mindestens zwei lokalen drahtlosen Netzwerke der Gruppe basiert, von einem Regionsdeskriptoren-Server als Antwort auf eine Anfrage (s1) empfangen wird, wobei die Beschreibung der mindestens zwei lokalen drahtlosen Netzwerke den Namen der mindestens zwei drahtlosen Netzwerke und einen Informationstext zu den mindestens zwei drahtlosen Netzwerken umfasst, wobei die Anfrage im DNSSEC-Format, Domain Name Server Security Extension, ist.

12. Computerprogramm auf einem Datenträger, das in den internen Speicher eines Computers, der einem Regionsdeskriptoren-Server zugeordnet ist, geladen werden kann, wobei das Programm Codeabschnitte für die Ausführung der Schritte eines Verfahrens nach einem der Ansprüche 4 bis 9, wenn das Programm auf dem Computer ausgeführt wird, umfasst.

13. Teilweise oder vollständig abnehmbares Datenspeichermittel, umfassend Informatikprogrammcodeanweisungen für die Ausführung der Schritte eines Verfahrens zur Bearbeitung von Anfragen nach einem der Ansprüche 4 bis 9.

14. Computerprogramm auf einem Datenträger, das in den internen Speicher eines Computers, der einer drahtlosen Kundenausrüstung zugeordnet ist, geladen werden kann, wobei das Programm Codeabschnitte für die Ausführung der Schritte eines Auswahlverfahrens nach den Ansprüchen 9 bis 10, wenn das Programm auf dem Computer ausgeführt wird, umfasst.

15. Teilweise oder vollständig abnehmbares Datenspeichermittel, umfassend Informatikprogrammcodeanweisungen für die Ausführung der Schritte eines Verfahrens nach den Ansprüchen 9 bis 10.

## Claims

1. Region descriptor server (14) for a group of wireless local area networks, said group comprising at least two wireless local area networks (12, 13) in a geographical region (11) where a wireless client device (10) is situated, said server being **characterized in that** it includes means (142) for sending, to the client device, in response to a request (s1), a description (r2) of said at least two wireless local area networks of said group, said request being in DNSSEC, Domain Name Server Security Extension, format, said description comprising the name of said wireless local area networks and informative text relating to said wireless local area networks and being intended to enable the user of the client device to select, from among said wireless local area networks, a particular wireless local area network in order to access same.

2. Descriptor server according to Claim 1, comprising a structured data set (141) comprising the description of said at least two wireless local area networks, said structured data set including a description field (L10, L11) for said at least two wireless networks of the group, the description of said wireless local area networks comprising the name of said wireless local area networks and the informative text relating to said wireless local area networks.

3. Descriptor server according to Claim 2, furthermore comprising:
- a field (L13, L14) associating the name of said wireless local area networks with a routing identifier of said wireless local area networks,
- a field (L16 to L24) describing parameters of said wireless local area networks,
- a field (L7) defining a period at the end of which the validity of the structured data set is confirmed.

4. Method for processing requests relating to a region descriptor server for a group of wireless local area networks, said group comprising at least two wireless local area networks in a geographical region where a wireless client device is situated, the method being **characterized in that** it includes a step (21b) of sending, to the wireless client device, in response to a first request (s1), a description of said at least two wireless local area networks of the group, said description comprising the name of said wireless local area networks and informative text relating to said wireless local area networks, said first request being in DNSSEC, Domain Name Server Security Extension, format, so as to enable the user of the client device to select, from among said wireless local area networks, a particular wireless local area network in order to access same.

5. Method for processing requests according to Claim 4, furthermore comprising a step (24b) of sending, to the wireless client device, in response to a second request (s3), at least one routing identifier of a wireless local area network selected from said group, said identifier being necessary to access said selected wireless local area network, said second request being in DNSSEC format.

6. Method for processing requests according to Claim 4 or Claim 5, comprising a step (34) of updating at least one parameter relating to one of said at least two wireless local area networks of the group.

7. Method for processing requests according to Claim 6, wherein the update step follows a periodic update request from the region descriptor server.

8. Method for processing requests according to Claim 6, wherein the update step follows spontaneous sending of an update of the parameter of the wireless network.

9. Method for processing requests according to one of Claims 4 to 8, comprising a step (22a) of selection, by the user of the wireless client device, of a wireless local area network from the group, a description of said at least two wireless local area networks of the group being received from the region descriptor server in response to a first request, said description of said at least two wireless networks comprising the name of said at least two wireless networks and informative text relating to said at least two wireless networks.

10. Processing method according to Claim 9, comprising a step (24a) of receiving, from the region descriptor server, in response to a second request, an identifier of said selected wireless local area network, said identifier being necessary to access said wireless network.

11. Wireless client device (10) comprising means (100) for selecting a wireless local area network from a group of at least two wireless local area networks, said selection based on a description of said at least two wireless local area networks of the group being received from a region descriptor server in response to a request (s1), said description of said at least two wireless local area networks comprising the name of said at least two wireless local area networks and informative text relating to said at least two wireless networks, said request being in DNSSEC, Domain Name Server Security Extension, format.

12. Computer program on a data medium and able to be loaded in the internal memory of a computer associated with a region descriptor server, the program comprising portions of code for executing the steps of a method according to any one of Claims 4 to 9 when the program is executed on said computer.

13. Partially or completely removable data storage medium including computer program code instructions for executing the steps of a method for processing requests according to any one of Claims 4 to 9.

14. Computer program on a data medium and able to be loaded in the internal memory of a computer associated with a wireless client device, the program comprising portions of code for executing the steps of a selection method according to Claims 9-10 when the program is executed on said computer.

15. Partially or completely removable data storage medium including computer program code instructions for executing the steps of a method according to Claims 9-10.
